(19) Europäisches Patentamt
European Patent Office
Office européen des brevets

(11) EP 1 019 552 B1

(12) **EUROPÄISCHE PATENTSCHRIFT**

(45) Veröffentlichungstag und Bekanntmachung des Hinweises auf die Patenterteilung:
**03.04.2002 Patentblatt 2002/14**

(21) Anmeldenummer: **98955342.5**

(22) Anmeldetag: **15.09.1998**

(51) Int Cl.[7]: **C22B 3/34**, C22B 3/38, C22B 60/02, C22B 59/00, C07F 9/16, G21F 9/12

(86) Internationale Anmeldenummer:
**PCT/DE98/02815**

(87) Internationale Veröffentlichungsnummer:
**WO 99/14386 (25.03.1999 Gazette 1999/12)**

(54) **VERFAHREN ZUR TRENNUNG VON DREIWERTIGEN ACTINIDEN VON MINDESTENS EINEM DREIWERTIGEN LANTHANID MIT (BIS)ARYLDITHIOPHOSPHINIGER SÄURE ALS EXTRAKTIONSMITTEL UND EINEM ORGANO-PHOSPHAT ALS SYNERGISTEN**

METHOD FOR SEPARATING TRIVALENT ACTINIDES FROM AT LEAST ONE TRIVALENT LANTHANIDE BY MEANS OF (BIS)ARYLDITHIOPHOSPHONIC ACID AS ORGANOPHOSPHATE AS SYNERGIST

PROCEDE DE SEPARATION D'ACTINIDES TRIVALENTS A PARTIR D'AU MOINS UN LANTHANIDE TRIVALENT AU MOYEN D'ACIDE (BIS)ARYLDITHIOPHOSPHONIQUE COMME AGENT D'EXTRACTION ET D'UN ORGANOPHOSPHATE COMME SYNERGISTE

(84) Benannte Vertragsstaaten:
**DE FR GB**

(30) Priorität: **17.09.1997 US 931894**
**29.07.1998 DE 19834152**

(43) Veröffentlichungstag der Anmeldung:
**19.07.2000 Patentblatt 2000/29**

(73) Patentinhaber: **FORSCHUNGSZENTRUM JÜLICH GMBH**
**52425 Jülich (DE)**

(72) Erfinder:
- **MODOLO, Giuseppe, Dr.**
  **D-52428 Jülich (DE)**
- **ODOJ, Reinhard**
  **D-52393 Gey (DE)**

(56) Entgegenhaltungen:
**EP-A- 0 210 387** **US-A- 4 647 438**
**US-A- 4 867 951**

- **G. MODOLO & R. ODOJ: "Separation of trivalent actinides from lanthanides by dithiophosphinic acids from HNO3 acid medium" JOURNAL OF ALLOYS AND COMPOUNDS, Bd. 271-273, 12. Juni 1998, Seiten 248-251, XP002093867 Lausanne, Switzerland**
- **KENNETH. L. NASH: "Review of the basic chemistry and recent developments in trivalent f-element separations" SOLVENT EXTRACTION AND ION EXCHANGE, Bd. 11, Nr. 4, 1993, Seiten 729-768, XP002093868 New York, USA in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 019 552 B1

## Beschreibung

Die Erfindung betrifft ein Verfahren zur Trennung von dreiwertigen Actiniden von mindestens einem dreiwertigen Lanthanid nach dem Oberbegriff des Anspruchs 1 sowie ein Extraktionsmittel.

Die Trennung von dreiwertigen Actiniden, wie Americium oder Curium von den dreiwertigen Lanthaniden ist ein seit langem bestehendes Problem. Verantwortlich für die Schwierigkeiten beim Trennen dieser Elemente ist das sehr ähnliche chemische Verhalten der dreiwertigen Ionen der Lanthanide und Actinide. Insbesondere die sehr ähnlichen Ionenradien tragen zum ähnlichen Verhalten dieser beiden Elementengruppen bei. So wurden schon zahlreiche Versuche unternommen, die dreiwertigen Ionen der Actinide und Lanthanide mit möglichst hoher Selektivität und hoher Effizientz zu trennen.

Es ist zwar bekannt, daß Extraktionsmittel mit weichen Donorgruppen, welche Stickstoff oder Schwefel als komplexbildende Strukturkomponenten enthalten, bei der Flüssig-flüssig-Extraktion eine gewisse Selektivität gegenüber dreiwertigen Actiniden besitzen, jedoch konnten die Trennungen bisher nur bei relativ hohen pH-Werten, bei denen die dreiwertigen Actinide zur Niederschlagsbildung neigen, oder aus 10 molaren LiCl-Lösungen vorgenommen werden.

Die europäische Patentanmeldung A-210387 zeigt ein Verfahren zur selektiven Trennung von Metallen aus wässrigen Lösungen mit Dithiophosphinsäure.
Die US-A-486 79 51 offenbart ein Extraktionsverfahren für die Trennung von Actiniden von Lanthaniden unter Verwendung verschiedener Extraktionsmittel.

Nach dem aus der Veröffentlichung K. L. Nash, Solvent Extr. Ion Exch. 11 (4), 729-768 (1993) bekannten Talspeak Prozeß ist eine selektive Extraktion von Lanthaniden mit Hilfe von Komplexierungsmitteln, welche die dreiwertigen Actiniden in Lösung halten, möglich. Jedoch erfolgt dieses Trennverfahren wiederum bei relativ hohen pH-Werten von 3-4 und erfordert den Zusatz von weiteren Salzen.

Ein von der Anmelderin zur Verfügung gestelltes Verfahren zur Extraktion von dreiwerigen Actiniden aus wäßrigen Lösungen, welche dreiwertige Actinide und dreiwertige Lanthanide enthält, ermöglicht eine Trennung bei hohen Säurekonzentrationen von 0,01 bis 2 mol/l $HNO_3$. Nach diesem Verfahren wird eine solche saure wäßrige Lösung welche ein Gemisch aus dreiwertigen Lanthaniden und Actiniden enthält mittels einem organischen Lösungsmittel extrahiert, welches als Extraktionsmittel eine bis(aryl)Dithiophosphinsäure unter Zusatz eines Synergisten enthält. Mit diesem Verfahren wird aufgrund des niedrigen pH-Wertes beziehungsweise der hohen Säurekonzentration eine Niederschlagsbildung der dreiwertigen Actinide verhindert und es werden bereits gute Trennergebnisse erzielt. Die zur Bewertung des Trennverhaltens herangezogenen Kennwerte sind hierbei der Verteilungskoeffizient D sowie der Trennfaktor $\alpha$.

$$D_{An(III)} = [An(III)_{org}]/[An(III)_w] \quad (1)$$

In Formel 1 sind:

$D_{An(III)}$ = Verteilungskoeffizient für ein dreiwertiges Actinid (dimensionslos)

$[An(III)_{org}]$ = Konzentration der dreiwertigen Actinide in der organischen Phase (mol/l).

$[An(III)_w]$ = Konzentration der dreiwertigen Actinide in der wäßrigen Phase (mol/l).

$$D_{Ln(III)} = [Ln(III)_{org}]/[Ln(III)_w] \quad (2)$$

In Formel 2 sind:

$D_{Ln(III)}$ = Verteilungskoeffizient für ein dreiwertiges Lanthanid (dimensionslos)

$[Ln(III)_{org}]$ = Konzentration der dreiwertigen Lanthanide in der organischen Phase (mol/l).

$[Ln(III)_w]$ = Konzentration der dreiwertigen Lanthanide in der wäßrigen Phase (mol/l).

$$\alpha = D_{An(III)}/D_{Ln(III)} \quad (3)$$

$\alpha$ = Trennfaktor (dimensionslos)

Die nach dem Verfahren unter Verwendung von bis(aryl)Dithiophosphinsäure im stark sauren Medium erzielten Trennfaktoren $\alpha$ liegen bei ca. 20 bis 50.

Es ist daher die Aufgabe der Erfindung, ein Verfahren zur Extraktion von dreiwertigen Actiniden aus einer Lösung enthaltend mindestens ein dreiwertiges Actinid und mindestens ein dreiwertiges Lanthanid, und/oder dreiwertiges Lanthan und/ oder dreiwertiges Yttrium, und ein Extraktionsmittel zu schaffen, welche höhere Trennfaktoren $\alpha$ ermöglichen. Es soll dabei ebenfalls bei niedrigen pH-Werten bzw. höheren Säurekonzentrationen gearbeitet werden können.

Ausgehend vom Oberbegriff des Anspruchs 1 wird die Aufgabe erfindungsgemäß gelöst, mit den im kennzeichnenden Teil des Anspruchs 1 angegebenen Merkmalen.

Mit dem erfindungsgemäßen Verfahren und dem Extraktionsmittel ist es nunmehr möglich, einen höheren Trennfaktor $\alpha$ unter Beibehaltung der Extraktionsbedingungen bei niedrigen pH-Werten bzw. höheren Säurekonzentrationen zu erreichen.

Vorteilhafte Weiterbildungen der Erfindung sind in den Unteransprüchen angegeben.

Im Folgenden soll die Erfindung beispielhaft erläutert werden.

In einer wäßrigen Phase sind dreiwertige Ionen von Lanthaniden ( Cer (Ce), Praseodym (Pr), Neodym (Nd), Promethium (Pr), Samarium (Sm), Europium (Eu), Gadolinium (Gd), Terbium (Tb), Dysprosium (Dy), Holmium (Ho), Erbium (Er), Thulium (Tm), Ytterbium (Yb), Luthenium (Lu) ) sowie Lanthan (La) und Yttrium (Y) oder mindestens eine Komponente aus dieser Gruppe und Ionen von dreiwertigen Actiniden, wie Americium (Am) und/oder Curium (Cm) enthalten. Die wäßrige Phase weist einen niedrigen pH-Wert auf, der einer $H^+$-Konzentration einer starken Säure von 0,01 bis 2 mol/l entspricht. Als Säuren können HCl, $H_2SO_4$ und insbesondere $HNO_3$ eingesetzt werden, da $HNO_3$ leicht lösliche Salze bildet. Die Extraktion erfolgt mittels eines organischen Lösungsmittels, welches als Extraktionsmittel bis (aryl)Dithiophosphinsäure der allgemeinen Formel (4) $R_2PS(SH)$ enthält.

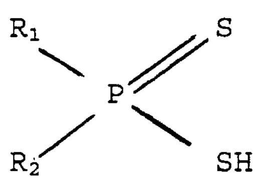

(4)

mit $R_1$ = phenyl- oder naphthyl,
$R_2$ = phenyl- oder naphthyl,

sowie mit methyl-, ethyl-, propyl-, isopropyl-, cyano-, nitro-, halogenyl- ($Cl^-$, $F^-$, $Br^-$, $J^-$) substituierten Resten von $R_1$ und $R_2$ wobei $R_1$ und $R_2$ mit mindestens einer Komponente aus der Gruppe von methyl-, ethyl-, propyl-, isopropyl-, cyano-, nitro-, halogenyl- ($Cl^-$, $F^-$, $Br^-$, $J^-$) subtituiert sein können. Diese Gruppen sind beispielhaft für die Acidität des Extraktionsmittels bis(aryl)Dithiophosphinsäure steigernde Substituenten, die zu besonders gutem Extraktionsverhalten führen. Entscheidend ist die Steigerung der Acidität des Extraktionsmittels, auf die genaue Stellung der Substituenten kommt es weniger an.

Erfindungegemäß enthält die organische Phase mindestens einen Synergisten aus der Gruppe bestehend aus Trioctylphosphat (Formel (5)), Tris-(2-ethylhexyl)-phosphat (Formel (6)) und Tris-(2-propylpentyl)-phosphat (Formel (7)).

$$(CH_3CH_2CH_2CH_2CH_2CH_2CH_2CH_2 - O -)_3P = O \qquad (5)$$

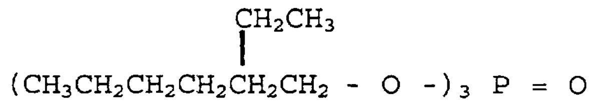

(6)

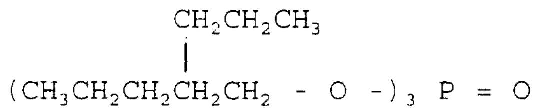

(7)

Mit der Zugabe der erfindungsgemäßen Synergisten wird eine erhebliche Zunahme des Trennfaktors $\alpha$ bewirkt. Die Selektivität bei der Abtrennung der Actinide von den Lanthaniden wird erheblich gesteigert.

Das organische Lösungmittel ist vorteilhafterweise ein eine aromatische Komponente, wie Benzol, enthaltendes Lösungsmittel oder ein rein aromatisches Lösungsmittel. In einer besondes vorteilhaften Ausgestaltung der Erfindung wird als Lösungsmittel mindestens eine Komponente aus der Gruppe von Toluol, Xylol, tert.-Butylbenzol, sowie bis- oder tris- (tert.-Butyl)-benzol, Isopropylbenzol, bis- oder tris- (Isopropyl)-benzol eingesetzt. Der Einsatz dieser Lösungsmittel führt zu zwei zusätzlichen positiven Effekten: Zum Einen wird die Selektivität der $An^{3+}$ Extraktion weiterhin gesteigert, zum Anderen wird der Verteilungskoeffizient $D_{An(III)}$ zusätzlich verbessert.

Die Reihenfolge der Wirksamkeit für den Trennfaktor $\alpha$ und den Verteilungskoeffizient verhalten sich wie folgt: Benzol < Toluol < Xylol < tert.-Butylbenzol < Bis(isopropyl)-benzol, Tri-isopropylbenzol, Bis-(tert.-Butyl)-benzol, Tris-(tert.-Butyl)-benzol.

Im Folgenden sind einige Ausführungsbeispiele dargestellt:

In den Tabellen sind Ergebnisse des erfindungsgemäßen Verfahrens zusammengefaßt:

Es zeigt:

Tabelle 1: Den Einfluß von erfindungsgemäßen Synergisten auf die Extraktion.
Tabelle 2: Den Einfluß des Lösungsmittels auf die Extraktion.
Tabelle 3: Die Zusammensetzung von simulierten Actiniden(III)- Lanthaniden (III)- Lösungen aus der Wiederaufarbeitung für Extraktionsuntersuchungen.
Tabelle 4: Selektive Extraktion von Am(III) aus den simulierten Lösungen nach Tabelle 3

Versuchsbeschreibung:

Chemikalien und Extraktionsmittel

Die Chemikalien Tributylphosphat (Aldrich, 99 %) , TOPO (= Trioctylphosphinoxid; Merck, p.a.quality), Trimethylphosphat (Aldrich, 97 %), Triphenylphosphat (Aldrich, 98 %), Trihexylphosphat (Aldrich, 97 %), Trioctylphosphat (Alfa), Tris(2-ethylhexyl)phosphat (Aldrich, 97 %) wurden wie bezogen eingesetzt. Die Lösungsmittel Toluol, Xylol, ter. Butylbenzol und Triisopropylbenzol besaßen p.a. Qualität. Die gemischten Lanthaniden(III) Lösungen von Ce(III), Eu (III), Gd(III), Nd(III), Pr(III), Sm(III), und Y(III), La (III) wurden durch Einwaage derer Nitratsalze in HNO3 hergestellt. Die von der Firma Blaseg, Isotopendienst bezogenen Tracer $Am^{241}$ (3,7 MBq in 1 ml 1 M HCl) und $Eu^{152\text{-}154}$ (3,7 MBq in 5 ml 0,5 M HCl) wurden jeweils auf 100 ml mit dest. $H_2O$ verdünnt. Ein 1:1 Gemisch beider Lösungen (pH 2) wurde als Stammlösung verwendet.

Die aromatischen Dithiophosphinsäuren wurden nach der Methode von W. A. Higgins, P. W. Vogel, W.G. Craig, Journal of the American Chemical Society 77, 1864-1866 (1955) hergestellt. In guten Ausbeuten konnten neben der beschriebenen Synthese von Bisphenyldithiophosphinsäure auch bis(methylphenyl), bis(chlorphenyl) und bis (fluorphenyl)Dithiophosphinsäure hergestellt werden.

Das Extraktionsmittel wurde durch Lösen eingewogener Mengen an Dithiophosphinsäure und Synergist in einem aromatischen Lösungsmittel hergestellt. Die Extraktionsexperimente wurden in Zentrifugengläser mit Teflon-Stopfen durchgeführt. 2 mL einer salpetersauren wässrigen Lösung, die vorher mit Am-241 und Eu-152 getracert wurde, wurde mit 2 mL Extraktionsmittel intesiv vermischt. Durch Zentrifugieren wurden die Phasen getrennt und anschließend jeweils ein Aliquot von 1 mL der organischen und wässrigen Phase zur Analyse entnommen. Die Konzentrationen der gammaaktiven Nuklide Am-241 und Eu-152 wurden mir Hilfe eines Gammaspektrometers bestimmt. Die Konzentrationen der inaktiven Elemente La, Ce, Pr, Nd, Sm, Eu, Gd und Y wurden mit Hilfe von ICP-MS ermittelt.

Für die in den Tabellen 1 bis 4 angegebenen Daten gelten die folgenden Bedingungen:

Tabelle 1:

Der Einfluß des Synergisten auf die Extraktion von Am(III) und Eu(III) mit einem Gemisch von 0,5 mol/L bis (chlorphenyl)Dithiophosphinsäure + 0,25 mol/L Synergist in Toluol aus salpetersaurer Lösung.

Tabelle 2:

Der Einfluß des Lösungsmittel auf die Extraktion von Am(III) und Eu(III) mit einem Gemisch von 0,5 mol/L bis (chlorphenyl)Dithiophosphinsäure + 0,25 mol/L Trioctylphosphinoxid aus salpetersaurer Lösung.

Tabelle 3:

Zusammensetzung von simulierten Actiniden(III)-Lanthaniden(III) Lösungen unterschiedlicher $HNO_3$-Konzentration aus der Wiederaufbereitung von Kernbrennstoffen nach dem PUREX-Process für Extraktionsuntersuchungen.

Tabelle 4:

Die selektive Extraktion von Am(III) aus simulierten Actiniden(III)-Lanthaniden(III) Lösungen unterschiedlichen $HNO_3$-Konzentrationen mit mit einem Gemisch von 0,5 mol/L bis(chlorophenyl)Dithiophosphinsäure + 0,25 mol/L Trioctylphophinoxid in tert.Butylbenzol.

Das erfindungsgemäße Verfahren und das Extraktionsmittel ermöglichen eine hochwirksame Abtrennung der dreiwertigen radioaktiven Actiniden von den dreiwertigen Lanthaniden, die insbesondere bei Radioaktiven Reaktorabfällen erwünscht ist.

Tabelle 1 :

| Synergist (0.25 mol/L) | 0.2 mol/L $HNO_3$ | | |
|---|---|---|---|
| | $D_{Am}$ | $D_{Eu}$ | $\alpha_{Am/Eu}$ |
| Tributylphosphat | 2,13 | 0,068 | 31,2 |
| Trimethylphosphat | 0,0046 | 0,00037 | 12,3 |
| Triphenylphosphat | 0,0017 | 0,00022 | 8,1 |
| Trihexylphosphat | 25,54 | 21,25 | 1,2 |
| Trioctylphosphat | 2,11 | 0,0088 | 237,9 |
| Tris(2-ethylhexyl)phosphat | 1,98 | 0,00165 | 1199,8 |

Tabelle 2 :

| Lösungsmittel | $HNO_3$ (mol/L | $D_{Am}$ | $D_{Eu}$ | $\alpha_{Am/Eu}$ |
|---|---|---|---|---|
| Toluol | 0.5 | 7.19 | 0.306 | 23.5 |
| | 1.0 | 0.794 | 0.0732 | 10.8 |
| | 2.0 | 0.113 | 0.0329 | 3.4 |
| | 3.0 | 0.0263 | 0.0158 | 1.7 |
| Xylol | 0.5 | 8.83 | 0.385 | 22.9 |
| | 1.0 | 0.927 | 0.0805 | 11.5 |
| | 2.0 | - | - | - |
| | 3.0 | - | - | - |
| | 0.5 | 19.18 | 0.615 | 31.2 |

Tabelle 2 : (fortgesetzt)

| Lösungsmittel | $HNO_3$ (mol/L | $D_{Am}$ | $D_{Eu}$ | $\alpha_{Am/Eu}$ |
|---|---|---|---|---|
| tert.-butylbenzol | 1.0 | 1.768 | 0.0988 | 17.9 |
| | 2.0 | 0.193 | 0.0393 | 4.9 |
| | 3.0 | 0.0476 | 0.0219 | 2.2 |
| | 0.5 | 55.8 | 1.23 | 45.6 |
| triisopropylbenzol | 1.0 | 4.76 | 0.159 | 29.8 |
| | 2.0 | 0.416 | 0.0570 | 7.3 |
| | 3.0 | 0.106 | 0.0461 | 2.3 |

Tabelle 3 :

| | $HNO_3$ in mol/l | | |
|---|---|---|---|
| | 0.50 | 0.99 | 2.06 |
| Element | in g/L | | |
| Y | 0.2372 | 0.2345 | 0.2380 |
| La | 0.7446 | 0.7200 | 0.7409 |
| Ce | 1.4595 | 1.3830 | 1.4470 |
| Pr | 0.6832 | 0.5993 | 0.6715 |
| Nd | 2.4823 | 2.4550 | 2.4948 |
| Sm | 0.4806 | 0.4685 | 0.4796 |
| Eu | 0.0939 | 0.0878 | 0.0907 |
| Gd | 0.0751 | 0.0765 | 0.0813 |
| Am-241 | Tracermengen | | |

Tabelle 4 :

| | $HNO_3$ | | | | | |
|---|---|---|---|---|---|---|
| | 0.5 mol/L | | 1.0 mol/L | | 2.0 mol/L | |
| Element | $D_{M(III)}$ | $\alpha_{Am/Ln}$ | $D_{M(III)}$ | $\alpha_{Am/Ln}$ | $D_{M(III)}$ | $\alpha_{Am/Ln}$ |
| Y | 0.325 | 36.7 | 0.0384 | 43.6 | <0.005 | - |
| La | 0.254 | 46.9 | 0.0353 | 47.4 | 0.0053 | 33.8 |
| Ce | 0.551 | 21.6 | 0.0741 | 22.6 | 0.0060 | 29.8 |
| Pr | 0.527 | 22.6 | 0.0844 | 19.9 | 0.0135 | 13.3 |
| Nd | 0.296 | 40.3 | 0.0527 | 31.8 | 0.0099 | 18.1 |
| Sm | 0.373 | 31.9 | 0.0672 | 24.9 | 0.0099 | 18.0 |
| Gd | 0.303 | 39.4 | 0.0515 | 32.5 | 0.0082 | 21.8 |
| Eu | 0.357 | 33.4 | 0.0688 | 24.4 | 0.0122 | 14.8 |
| $^{152}$Eu | 0.352 | 33.8 | 0.0931 | 18.0 | 0.0377 | 4.8 |
| $^{241}$Am | 11.926 | | 1.677 | | 0.180 | |

**Patentansprüche**

1. Verfahren zur Trennung von dreiwertigen Actiniden von mindestens einem dreiwertigen Lanthanidenelement und/oder Lanthan und/oder Yttrium, welche sich in wässriger Lösung einer $H^+$-Konzentration von 0,01 mol/l bis 2 mol/l befinden und bei dem eine Extraktion des dreiwertigen Actinids mittels bis(aryl)Dithiophosphinsäure der allgemeinen Formel (4)

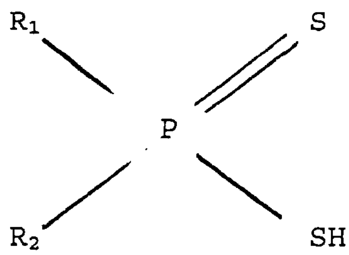

(4)

mit $R_1$ = phenyl- oder naphthyl,
$R_2$ = phenyl- oder naphthyl,

wobei $R_1$ und $R_2$ mit mindestens einer Komponente aus der Gruppe von methyl-, ethyl-, propyl-, isopropyl-, cyano-, nitro-, halogenyl- subtituiert sein können, in einem organischen Lösungsmittel oder Lösungsmittelgemisch unter Zusatz eines Synergisten vorgenommen wird,
**dadurch gekennzeichnet,**
**daß** als Synergist mindestens eine Komponente aus der Gruppe von Trioctylphosphat, Tris- (2-propylpentyl)-phosphat oder Tris-(2-ethylhexyl)-phosphat eingesetzt wird.

**2.** Verfahren nach Anspruch 1,
**dadurch gekennzeichnet,**
**daß** als organisches Lösungsmittel eine aromatische Verbindung eingesetzt wird.

**3.** Verfahren nach Anspruch 2,
**dadurch gekennzeichnet,**
**daß** als aromatisches Lösungsmittel mindestens eine Komponente aus der Gruppe von Toluol, Xylol, tert.-Butylbenzol, bis-(tert.-Butyl)-benzol, tris-(tert.-Butyl)-benzol, Isopropylbenzol, bis-(isopropyl)-benzol und tris-(isopropyl) benzol eingesetzt wird.

**4.** Verfahren nach einem der Ansprüche 1 bis 3,
**dadurch gekennzeichnet,**
**daß** die dreiwertigen Actiniden Americium$^{3+}$ und/oder Curium$^{3+}$ abgetrennt werden.

**5.** Verfahren nach einem der Ansprüche 1 bis 4,
**dadurch gekennzeichnet,**
**daß** mindestens eine Komponente der sich in der wässrigen Phase befindenden dreiwertigen Actiniden und

**6.** Extraktionsmittel,
**dadurch gekennzeichnet,**
**daß** es mindestens eine Komponente der bis (aryl) Dithiophosphinsäure der allgemeinen Formel (4)

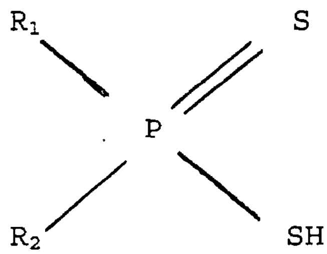

(4)

mit $R_1$ = phenyl- oder naphthyl,
$R_2$ = phenyl- oder naphthyl,

wobei $R_1$ und $R_2$ mit mindestens einer Komponente aus der Gruppe von methyl-, ethyl-, propyl-, isopropyl-, cyano-, nitro-, halogenyl- subtituiert sein können, sowie mindestens eine Komponente aus der Gruppe von Trioctylphosphat Tris- (2-propypentyl) - phosphat und Tris - (2-ethylhexyl) - phosphat als Synergisten in einem organischen Lösungsmittel enthält.

**7.** Extraktionsmittel nach Anspruch 6,
**dadurch gekennzeichnet,**
**daß** das organische Lösungsmittel eine aromatische Verbindung ist.

**8.** Extraktionsmittel nach Anspruch 7,
**dadurch gekennzeichnet,**
**daß** das aromatisches Lösungsmittel mindestens eine Komponente aus der Gruppe von Toluol, Xylol, (tert.-butyl)-benzol, bis-(tert.-butyl)-benzol, tris-(tert.-butyl)-benzol, Isopropylbenzol, bis(isopropyl)-benzol und tris-(isopropyl)-benzol ist.

## Claims

**1.** A method of separating trivalent actinides from at least one trivalent lanthanide element and/or lanthanum and/or yttrium which are present in aqueous solution at an $H^+$ concentration of 0.01 mol/l to 2 mol/l, wherein extraction of the trivalent actinide is effected by means of a bis(aryl)dithiophosphinic acid of general formula (4)

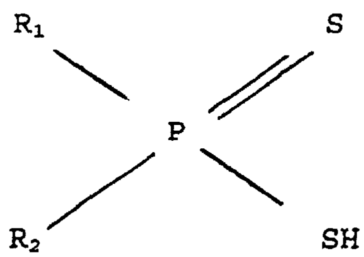

(4)

where $R_1$ = phenyl or naphthyl,
$R_2$ = phenyl or naphthyl,

wherein $R_1$ and $R_2$ can be substituted with at least one component from the group comprising methyl, ethyl, propyl, isopropyl, cyano, nitro and halogenyl, in an organic solvent or solvent mixture with the addition of a synergist,
**characterised in that**
at least one component from the group comprising trioctyl phosphate, tris-(2-propylpentyl) phosphate or tris-(2-ethylhexyl) phosphate is used as a synergist.

**2.** A method according to claim 1,
**characterised in that**
an aromatic compound is used as an organic solvent.

**3.** A method according to claim 2,
**characterised in that**
at least one component from the group comprising toluene, xylene, tert.-butylbenzene, bis-(tert.-butyl)benzene, tris-(tert.-butyl)benzene, isopropylbenzene, bis-(isopropyl)-benzene and tris-(isopropyl)benzene is used as an aromatic solvent.

**4.** A method according to any one of claims 1 to 3,
**characterised in that**
the trivalent actinides americium$^{3+}$ and/or curium$^{3+}$ are separated.

5. A method according to any one of claims 1 to 4,
**characterised in that**
at least one component of the trivalent actinides and lanthanides which are present in the aqueous phase is radioactive.

6. An extractant,
**characterised in that**
it contains at least one component comprising a bis(aryl)dithiophosphinic acid of general formula (4)

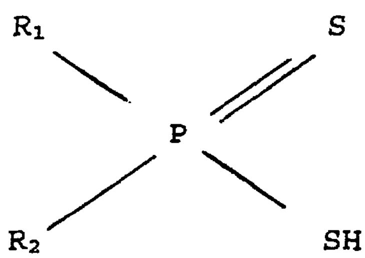

(4)

where $R_1$ = phenyl or naphthyl,
$R_2$ = phenyl or naphthyl,

wherein $R_1$ and $R_2$ can be substituted with at least one component from the group comprising methyl, ethyl, propyl, isopropyl, cyano, nitro and halogenyl, and also contains, as a synergist in an organic solvent, at least one component from the group comprising trioctyl phosphate, tris-(2-propylpentyl) phosphate or tris-(2-ethylhexyl) phosphate.

7. An extractant according to claim 6,
**characterised in that**
the organic solvent is an aromatic compound.

8. An extractant according to claim 7,
**characterised in that**
the aromatic solvent is at least one component from the group comprising toluene, xylene, (tert.-butyl)benzene, bis-(tert.-butyl)benzene, tris-(tert.-butyl)benzene, isopropylbenzene, bis-(isopropyl)benzene and tris-(isopropyl)-benzene.

## Revendications

1. Procédé pour séparer des actinides trivalents d'au moins un élément de lanthanide trivalent et/ou du lanthane et/ou de l'yttrium, qui se trouvent dans une solution aqueuse ayant une concentration d'H+ de 0,01 mole/litre à 2 moles/litre et dans lequel on effectue une extraction de l'actinide trivalent au moyen d'acide bis(aryl)dithiohypophosphoreux de formule développée (4)

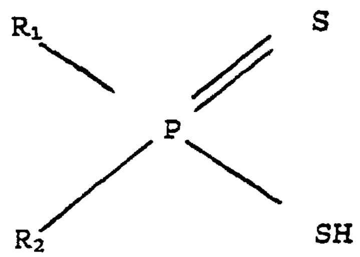

(4)

dans laquelle $R_1$ = phényle ou naphtyle,

$R_2$ = phényle ou naphtyle,

$R_1$ et $R_2$ pouvant être substitués par au moins un constituant choisi dans le groupe de méthyle, éthyle, propyle, isopropyle, cyano, nitro, halogényle, dans un solvant organique ou dans un mélange de solvants organiques avec addition d'un agent de synergie,

**caractérisé en ce qu'**il consiste à utiliser comme agent de synergie au moins un constituant choisi dans le groupe du phosphate de trioctyle, du phosphate de tris-(2-propylpentyle) ou du phosphate de tris-(2-éthylhexyle).

2. Procédé suivant la revendication 1, **caractérisé en ce qu'**il consiste à utiliser comme solvant organique un composé aromatique.

3. Procédé suivant la revendication 2, **caractérisé en ce qu'**il consiste à utiliser comme solvant aromatique au moins un constituant choisi dans le groupe du toluène, du xylène, du tert.butylbenzène, du bis-(tert.butyl)-benzène, du tri-(tert.butyl)benzène, de l'isopropylbenzène, du bis-(isopropyl)benzène et du tri-(isopropyl)benzène.

4. Procédé suivant l'une des revendications 1 à 3, **caractérisé en ce qu'**il consiste à séparer les actinides trivalents americium$^{3+}$ et/ou curium$^{3+}$.

5. Procédé suivant l'une des revendications 1 à 4, **caractérisé en ce qu'**au moins l'un des constituants des actinides et des lanthanides se trouvant en phase aqueuse est au moins radioactif.

6. Agent d'extraction,

**caractérisé en ce qu'**il comprend au moins un constituant de l'acide bis(aryl)dithiohypophosphoreux de forme (4) développée

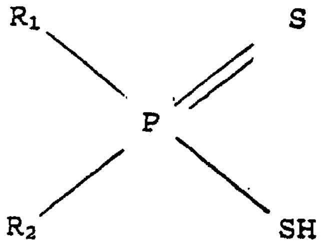

(4)

dans laquelle $R_1$ = phényle ou naphtyle,
$R_2$ = phényle ou naphtyle,

$R_1$ et $R_2$ pouvant être substitués par au moins un constituant choisi dans le groupe de méthyle, éthyle, propyle, isopropyle, cyano, nitro, halogényle, ainsi qu'au moins un constituant choisi dans le groupe du phosphate de trioctyle, du phosphate de tris-(2-propylpentyle) et du phosphate de tris-(2-éthylhexyle) comme agent de synergie dans un solvant organique.

7. Agent d'extraction suivant la revendication 6, **caractérisé en ce que** le solvant organique est un composé aromatique.

8. Agent d'extraction suivant la revendication 7, **caractérisé en ce que** le solvant aromatique est au moins un constituant choisi dans le groupe du toluène, du xylène, du tert.butylbenzène, du bis-(tert.butyl)-benzène, du tri-(tert.butyl)benzène, de l'isopropylbenzène, du bis-(isopropyl)benzène et du tri-(isopropyl)benzène.